(19) Europäisches Patentamt
European Patent Office
Office européen des brevets

(11) Publication number: **0 135 126**
**B1**

(12) # EUROPEAN PATENT SPECIFICATION

(45) Date of publication of patent specification: **04.11.87**

(51) Int. Cl.$^4$: **C 03 B 37/025**

(21) Application number: **84109545.8**

(22) Date of filing: **10.08.84**

(54) **Preparation of glass for optical fibers.**

(30) Priority: **12.08.83 JP 146644/83**

(43) Date of publication of application:
**27.03.85 Bulletin 85/13**

(45) Publication of the grant of the patent:
**04.11.87 Bulletin 87/45**

(84) Designated Contracting States:
**DE FR GB IT NL**

(56) References cited:
**EP-A-0 046 281**
**US-A-4 161 505**
**US-A-4 162 908**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Hiroshi, Shinba Yokohama Works**
**Sumitomo Electric Industries, Ltd 1, Taya-cho**
**Totsuka-ku Yokohama-shi Kanagawa-ken (JP)**
Inventor: **Gotaro, Tanaka Yokohama Works**
**Sumitomo Electric Industries, Ltd 1, Taya-cho**
**Totsuka-ku Yokohama-shi Kanagawa-ken (JP)**
Inventor: **Hiroshi, Yokota Yokohama Works**
**Sumitomo Electric Industries, Ltd 1, Taya-cho**
**Totsuka-ku Yokohama-shi Kanagawa-ken (JP)**

(74) Representative: **Hansen, Bernd, Dr.rer.nat. et al**
**Hoffmann, Eitle & Partner Patentanwälte**
**Arabellastrasse 4**
**D-8000 München 81 (DE)**

**EP 0 135 126 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to preparation of an optical fiber preform tube. More particularly, it relates to preparation of an optical fiber preform tube containing fluorine as a dopant for controlling the refractive index.

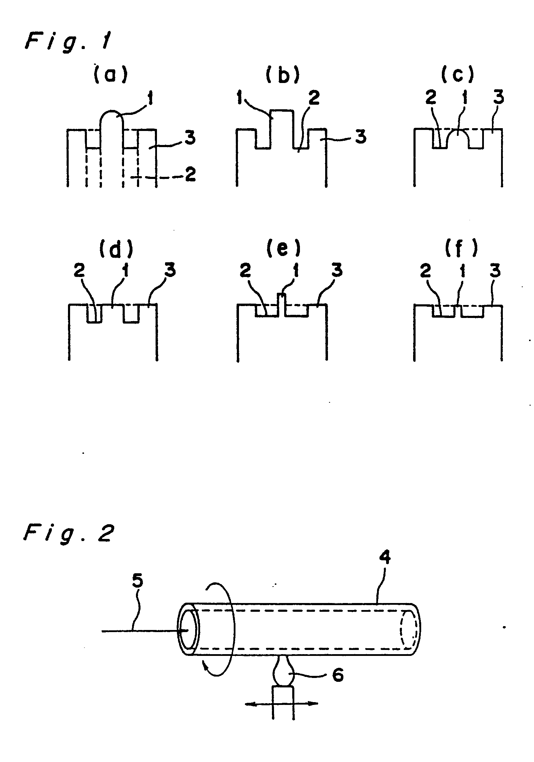

One of the generally known processes for synthesizing glass for optical fibers is a modified chemical vapor deposition method (hereinafter referred to as MCVD method) as disclosed in Japanese Patent Kokai Publication (unexamined) No. 57635/75. The preamble of claim 1 is based on such process. Figure 2 schematically illustrates the MCVD method. As a raw material *5* for synthesizing glass (e.g. $SiCl_4$, $BBr_3$, $GeCl_4$, $POCl_3$, $O_2$, etc.) is introduced into a rotating quartz glass tube *4* while heating the quartz glass tube *4* externally by means of a heat source *6* which reciprocates along the tube *4* the raw material *5* introduced is oxidized. Thereby, a synthetic glass layer deposits on the inner wall of the quartz glass tube. The quartz glass tube with the deposited glass layer is collapsed to form a preform for optical fibers. The raw material for synthesizing glass for optical fibers usually contains a dopant for controlling a refractive index of the resulting fiber. In case of using boron as the dopant, it has been proved that the refractive index is adversely affected by thermal history such as quenching involved in the subsequent drawing.

Thus, many proposals have been made to use fluorine as a dopant free from the above-described disadvantage. For example, it has been proposed to use $SF_6$, $CF_4$ or $SiF_4$ as a dopant for controlling a refractive index (cf. K. Abe, 2nd European Conference 76, page 59) and to use $CCl_2F_2$, sulfur tetrafluoride or boron trifluoride for the same purpose (cf. Japanese Patent Kokai Publication (unexamined) No. 57846/78). However, these dopants have several disadvantageous such as a low synthesizing rate, a low yield or insufficient doping of fluorine. These disadvantages may be ascribed to insufficient decomposition of a fluorine-containing gas (mostly Flon (trade mark) gases) in the MCVD process, which results in insufficient doping of fluorine, or to formation of gaseous $SiF_4$ according to the following reaction formula even if the sufficient decomposition of the fluroine-containing gas can be achieved, thereby to reduce the production proportion of solid materials:

$$3SiCl_4+2SF_6+2O_2 \rightarrow \underset{\text{(gaseous)}}{3SiF_4}+2SO_2+6Cl_2$$

In US—A—4,162,908 a method for forming a coating of a fluorine containing synthetic OH ion-free quartz glass on a refractory support is disclosed. The known process comprises passing a hydrogen-free silicon compound, oxygen and vaporous $CCl_2F_2$, $CClF_3$ or $CF_4$ in a hydrogen-free gas stream through an induction coupled plasma burner whereby said hydrogen-free silicon compound reacts with said oxygen to form synthetic OH ion-free quartz glass, the amount of said $CCl_2F_2$, $CClF_3$ or $CF_4$, passed through said burner, being sufficient to yield a fluorine content in the quartz glass in an amount of at least 500 grams per kg of quartz to be produced whereby there is formed a fluorine-doped synthetic OH ion-free quartz glass and depositing said fluorine-doped synthetic OH ion-free quartz glass as a coating on a refractory support. A thus modified quartz glass is suitable for the manufacture of light conducting fibres. This process necessitates the use of an induction coupled plasma burner and temperatures in the range of 1,800 to 2,600°C.

As a result of the extensive study to overcome the above-described disadvantages of the conventional methods and dopants, it has now been found that effectively doped optical fiber preform tubes can be produced by a combination of the MCVD process and $SiFX_3$ as a glass precursor, wherein X represents a chlorine or bromine atom.

The present invention comprises a process for producing an optical fiber preform tube in which gaseous raw material for synthesizing glass and oxygen are introduced into a quartz glass tube, and the quartz glass tube is externally heated by a moving heat source whereby the exterior of the quartz tube is heated to a temperature of from 1,000 to 1,500°C and a synthetic glass layer is deposited onto the inner wall of the quartz glass tube, characterised in that said gaseous raw material comprises $SiFX_3$, wherein X is a chlorine or bromine atom.

Figures 1 (a) to (f) are the graphs each showing a refractive index distribution of the typical optical fiber which can be produced from an optical fiber preform tube of the present invention.

Figure 2 shows a schematic view illustrating the CVD method.

The characteristic of the invention resides in that the raw material 5 for synthesizing the glass of the inner layer comprises $SiFX_3$ (eg. $SiFCl_3$ and $SiFBr_3$). The ratio of $SiFX_3$ to oxygen is usually from 1:1,000 to 1:1, preferably from 1:100 to 1:10. The use of $SiFX_3$ as a dopant makes it possible to dope fluorine in silica to a high concentration without reducing the synthesizing rate.

The doping mechanism of the present invention can be explained by comparing bond energy of atoms which participate in the oxidation reaction of the raw material. For example, in case of $SiFCl_3$, the Si-Cl bond having a bond energy of 296 KJ/mol is easily cleaved in the course of the conventional MCVD method to form a Si-O bond having a bond energy of 432 KJ/mol, while the Si-F bond having a bond energy of 590/mol is not easily cleaved and remains as such, which results in the deposition of a solid phase consisting of $SiO_{1.5}F$.

On the contrary, according to the conventional MCVD method using $SiCl_4$, $O_2$ and Flon (trade mark) gas

(e.g. $CF_4$), it is believed that the active fluorine forms an Si-F bond upon reaction of these gases. As a result, probability of the formation of the Si-O bond decreases and gaseous molecules (eg. $SiF_4$, $SiOF_2$, etc.) form, whereby the yield of solid phase glass decreases.

Further, even when a Si-F-Cl type compound is used as a raw material, those compounds having two or more fluorine atoms in their molecule (e.g. $SiF_2Cl_2$, $SiF_3Cl$, etc.) tend to form molecules such as $SiOF_2$, $SiO_{0.5}F_3$ and $SiF_4$. In this case, formation of solid phase nuclei is insufficient and it is difficult to form a solid silica phase containing fluorine. This is the reason why Si compounds having one fluorine atom per molecule are preferred for the purpose contemplated.

However, those compounds having one fluorine atom and also at least one hydrogen atom per molecule (eg. $SiH_3F$, $Si(CH_3O)_3F$, etc.) sometimes introduce moisture in the glass produced. Therefore, they are not suitable as a raw material for the glass of the invention.

The raw material for synthesizing the glass of the present invention comprises $SiFX_3$ and optionally at least one other raw material (eg. $SiCl_4$, $GeCl_4$, $POCl_3$, $BCl_3$, Flon (trade mark) gases, etc.). Combined use of these raw materials makes it possible to control the amount of fluorine to be doped. When $GeCl_4$, $POCl_3$ or $BCl_3$ is used in combination with $SiFX_3$, a F-doped $GeO_2$—$SiO_2$ type glass, an F-doped $P_2O$—$SiO_2$ type glass or an F-doped $B_2O_3$—$SiO_2$ type glass can be synthesized respectively. In this case, the ratio of $SiFX_3$ to other raw material(s) is usually from 1:100 to 100:1, preferably from 1:10 to 10:1.

The introduction rate of the raw material mixture is usually from 10 to 1,000 cc/min., preferably from 100 to 500 cc/min.

According to the present invention, not only a multi-mode fiber as shown in Figures 1(a) to (d) but also a single mode fiber as shown in Figures 1 (e) and (f) can be produced. In Figure 1, numerals 1, 2 and 3 denote a core, a cladding, and a jacket respectively. Furthermore, by virtue of the present invention, it is possible to produce a fiber having a high refractive index (namely, a high NA fiber) or a fiber having a great difference in refractive index between a core and a cladding which is suitable as an image fiber (e.g. a fiber of Figure 1 (b)) at high efficiency, and also to produce optical fibers having a core consisting mainly of pure silica which are excellent in radiation resistance (e.g. fibers of Figures 1 (c), (d) and (f).

When the mixing ratio of $SiFX_3$, e.g., $SiFCl_3$, to other raw materials (e.g. $SiCl_4$) is varied with the passage of time, an optical fiber with its refractive index being varied in its radial direction (e.g., fibers of Figures 1 (a) and (c) can be produced.

The present invention can also be applied to a method wherein a fluorine-doped cladding is synthesized onto the inner wall of the quartz glass tube and a preliminarily prepared glass rod is then inserted as a core into the quartz glass tube.

The size of the quartz tube may be the same as that used in the conventional MCVD method. For example, the outer diameter of the quartz tube is from 10 to 50 mm, preferably from 15 to 30 mm.

The method of the invention may be carried out under the substantially same conditions (eg. temperature, pressure, time, etc.) as those of the conventional MCVD method.

The exterior of the quartz tube is heated to a temperature of from 1,000 to 1,500°C. Other preferred conditions are:

Rotating rate of the quartz tube: 20—100 rpm

Reciprocating rate of the heater: 1—20 cm/min.

The quartz tube is preferably rotated to uniformly heat it.

The present invention will be hereinafter explained further in detail by following Examples.

Example 1

A gaseous mixture of the raw materials shown in Table 1 below was introduced at a predetermined rate in a quartz glass tube having an outer diameter of 20 mm and a wall thickness of 1.7 mm which rotated at 50 rpm, while heating the quartz glass tube with an oxyhydrogen burner which reciprocated along the tube at a speed of 10 cm/min. The outer wall of the tube was thus heated to about 1400°C. After the raw materials were introduced at the same temperature for 5 hours, introduction of $SiFCl_3$ was terminated while introduction of $SiCl_4$ and $O_2$ were containued at the same temperature for 4 minutes, thereby to deposit pure $SiO_2$. Then, introduction of the raw materials was terminated and the temperature was raised to 1,700°C to collapse the thus formed glass. The resulting preform was drawn into fiber at a drawing ratio of 20 m/min. at 2,000°C to obtain a single mode fiber having a refractive index distribution shown in Figure 1 (f). According to the results shown in Table 1, the yield of the glass was as high as 50% based on Si and the difference of refractive indexes between the cladding and the core ($SiO_2$) was as great as 0.3%. Further, the resulting fiber showed attenuation as low as 0.5 dB/Km at a wavelength of 1.3 micrometers.

Examples 2 to 3 and Comparative Examples 1 to 2

The same procedures as described in Example 1 were repeated but using a gaseous mixture of the raw materials shown in Table 1. The results are shown in Table 1.

As is apparent from the results shown in Table 1, the fibers of the present invention show greater differences in refractive index between the core and the cladding and higher yields of glass produced than those obtained in Comparative Examples in which $SiFCl_3$ was not used as a raw material. The greater refractive index difference between the core and the cladding indicates that fluorine was doped to higher concentration.

TABLE 1

| | Raw materials (cc/min) | | | | Difference in refractive index ($SiO_2$ basis) (%) | Yield (%) (Si basis) |
|---|---|---|---|---|---|---|
| | $SiFCl_3$ | $SiCl_4$ | $O_2$ | Others | | |
| Example 1 | 15 | 150 | 1000 | — | –0.3 | 50 |
| Example 2 | 40 | 150 | 1000 | — | –0.7 | 40 |
| Example 3 | 40 | 150 | 1000 | $POCl_3$ 5 | –0.7 | 45 |
| Comparative Example 1 | — | 150 | 1000 | $SF_6$ 40 | –0.2 | 20 |
| Comparative Example 2 | — | 150 | 1000 | $CF_4$ 40 | –0.1 | 40 |

**Claims**

1. A process for producing an optical fiber preform tube in which gaseous raw material for synthesizing glass and oxygen are introduced into a quartz glass tube, and the quartz glass tube is externally heated by a moving heat source whereby the exterior of the quartz tube is heated to a temperature of from 1,000 to 1,500°C and a synthetic glass layer is deposited onto the inner wall of the quartz glass tube characterised in that said gaseous raw material comprises $SiFX_3$, wherein X is a chlorine or bromine atom.

2. A process according to claim 1, wherein the ratio of $SiFX_3$ to other raw material(s) is varied with the passage of time, whereby the refractive index of the layer is varied by varying the amount of fluorine dopant in these layers.

**Patentansprüche**

1. Verfahren zum Herstellen eines Vorformrohres mit optischen Fasern, wobei gasförmiges Rohmaterial zur Synthese von Glas und Sauerstoff in ein Quarzglasrohr eingeführt werden, und das Quarzglasrohr von aussen mit Hilfe einer sich bewegenden Wärmequelle erwärmt wird, wodurch die Aussenseite des Quarzrohres auf eine Temperatur von 1.000 bis 1.500°C erwärmt wird, und sich eine synthetische Glasschicht auf der Innenwand des Quarzglasrohres niederschlägt, dadurch gekennzeichnet, dass das genannte gasförmige Rohmaterial $SiFX_3$, worin X ein Chloroder Bromatom darstellt, umfasst.

2. Verfahren nach Anspruch 1, wobei das Verhältnis $SiFX_3$ zu anderem Rohmaterial bzw. Rohmaterialien im Verlaufe der Zeit geändert wird, wodurch der Brechnungsindex der Schicht durch unterschiedliche Mengen des Fluor-Dopierungsmittels in diesen Schichten geändert wird.

**Revendications**

1. Un procédé de fabrication d'une préforme tubulaire pour fibres optiques dans lequel une matière première gazeuse pour la synthèse du verre et de l'oxygène sont introduits dans un tube en verre de quartz et le tube en verre de quartz est chauffé extérieurement par une source de chaleur mobile, grâce à quoi l'extérieur du tube en quartz est chauffé à une température de 1.000 à 1.500°C et une couche de verre synthétique se dépose sur la paroi interne du tube en verre de quartz, caractérisé en ce que ladite matière première gazeuse comprend du $SiFX_3$ où X est un atome de chlore ou de brome.

2. Procédé selon la revendication 1, dans lequel on fait varier le rapport de $SiFX_3$ à l'autre ou aux autres matières premières au cours du temps, à la suite de quoi l'indice de réfraction des couches se modifie par variation de la quantité de fluor comme dopant dans ces couches.

*Fig. 1*

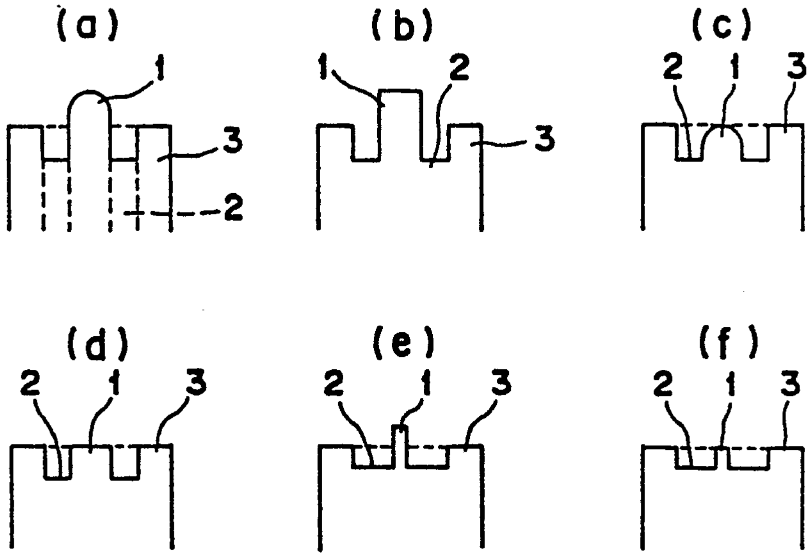


*Fig. 2*